# EUROPÄISCHE PATENTANMELDUNG

(11) **EP 1 542 114 A1**
(43) Veröffentlichungstag der Anmeldung: **15.06.2005**
(21) Anmeldenummer: 03090433.8
(22) Anmeldetag: 12.12.2003
(51) Int. Cl.: G06F 1/00

(54) **Speicher mit Zugriffskontrolle, die abhängig von der Tätigkeitsart des entfernten Kommunikationsendgeräts ist, das auf den Speicher zugreifen will**

(71) Anmelder: SIEMENS AKTIENGESELLSCHAFT, 80333 München (DE)
(72) Erfinder: Böhmer, Bernard, Dr., 14052 Berlin (DE); Hauptvogel, Andreas, 12103 Berlin (DE)

(57) **Zusammenfassung**

Die Erfindung betrifft ein Verfahren zum Kontrollieren des Zugriffs auf in einem Datenspeicher (DS) eines Kommunikationsnetzes (KN) gespeicherte Speicherdaten. Bei dem Verfahren werden auf den Empfang einer von einem Kommunikationsendgerät (KEG) eines Kommunikationsteilnehmers stammenden Datenanforderungsnachricht (DAN) hin von einem zwischen dem Kommunikationsendgerät und dem Datenspeicher angeordneten Zwischenknoten (ZK) die aktuelle Tätigkeitsart des Kommunikationsteilnehmers betreffende Tätigkeitsart-Daten mittels eines Präsenzrechners (PR) ermittelt; aus einem Berechtigungsspeicher (BS) des Zwischenknotens werden den Tätigkeitsart-Daten zugeordnete Berechtigungsdaten ausgelesen, welche eine tätigkeitsartabhängige Berechtigung des Kommunikationsteilnehmers zum Zugriff auf die mit der Datenanforderungsnachricht angeforderten Speicherdaten betreffen. Entsprechend dieser ausgelesenen Berechtigungsdaten wird der Zugriff auf die Speicherdaten freigegeben oder gesperrt.

## Beschreibung

Die Erfindung betrifft ein Verfahren zum Kontrollieren des Zugriffs auf in einem Datenspeicher eines Kommunikationsnetzes gespeicherte Speicherdaten.

In Kommunikationsnetzen werden Kommunikationsteilnehmern oftmals Dienste angeboten, die eine Zugriffsmöglichkeit auf in einem Datenspeicher der Kommunikationsnetze gespeicherte Daten (Speicherdaten) beinhalten.

Der Erfindung liegt die Aufgabe zugrunde, ein Verfahren anzugeben, mit dem ein Zugriff auf solche Speicherdaten kontrolliert und eingeschränkt werden kann.

Diese Aufgabe wird erfindungsgemäß gelöst durch ein Verfahren zum Kontrollieren des Zugriffs auf in einem Datenspeicher eines Kommunikationsnetzes gespeicherte Speicherdaten, wobei bei dem Verfahren auf den Empfang einer von einem Kommunikationsendgerät eines Kommunikationsteilnehmers stammenden Datenanforderungsnachricht hin von einem zwischen dem Kommunikationsendgerät und dem Datenspeicher angeordneten Zwischenknoten die aktuelle Tätigkeitsart des Kommunikationsteilnehmers betreffende Tätigkeitsart-Daten mittels eines Präsenzrechners ermittelt werden, aus einem Berechtigungsspeicher des Zwischenknotens den Tätigkeitsart-Daten zugeordnete Berechtigungsdaten ausgelesen werden, welche eine tätigkeitsartabhängige Berechtigung des Kommunikationsteilnehmers zum Zugriff auf die mit der Datenanforderungsnachricht angeforderten Speicherdaten betreffen, und entsprechend dieser ausgelesenen Berechtigungsdaten der Zugriff auf die Speicherdaten freigegeben oder gesperrt wird. Hierbei ist besonders vorteilhaft, dass die Berechtigung zum Zugriff auf die Speicherdaten von der aktuellen Tätigkeitsart des Kommunikationsteilnehmers abhängt. Unter einer solchen Tätigkeitsart ist eine Klasse von Tätigkeiten des Kommunikationsteilnehmers zu verstehen, beispielsweise umfasst die Tätigkeitsart "im Büro" alle von einem Kommunikationsteilnehmer in Ausübung seiner beruflichen Tätigkeit im Büro durchzuführenden Tätigkeiten. Die Tätigkeitsart "zu Hause" umfasst alle von einem Kommunikationsteilnehmer privat zu Hause durchzuführenden Tätigkeiten und die Tätigkeitsart "im Urlaub" umfasst alle Tätigkeiten eines Kommunikationsteilnehmers, die dieser privat während seines Erholungsurlaubs durchführt. Solche die aktuelle Tätigkeitsart betreffende Tätigkeitsart-Daten (z.B. "im Büro", "zu Hause" oder "im Urlaub") werden erfindungsgemäß unter Benutzung eines Präsenzrechners des Kommunikationsrechners ermittelt und dazu verwendet, aus dem Berechtigungsspeicher die den Tätigkeitsart-Daten zugeordneten Berechtigungsdaten auszulesen. Anhand der in den Berechtigungsdaten enthaltenen Berechtigungsinformationen wird dann der Zugriff auf die Speicherdaten freigegeben oder gesperrt. Bei diesem Verfahren ist insbesondere vorteilhaft, dass die Zugriffskontrolle dynamisch erfolgt, d.h. Änderungen der aktuellen Tätigkeitsart des Kommunikationsteilnehmers werden bei dem Verfahren berücksichtigt.

Das Verfahren kann erfindungsgemäß so ablaufen, dass die Tätigkeitsart-Daten ermittelt werden, indem diese von dem Präsenzrechner abgefragt werden. Dabei ist insbesondere vorteilhaft, dass die Tätigkeitsart-Daten nur im Bedarfsfall von dem Präsenzrechner zu dem Zwischenknoten übertragen zu werden brauchen.

Das erfindungsgemäße Verfahren kann aber auch so ablaufen, dass die Tätigkeitsart-Daten ermittelt werden, indem diese aus einer Datenmenge ausgelesen werden, die bei Auftreten von Änderungen der Tätigkeitsart von Kommunikationsteilnehmern durch den Präsenzrechner selbsttätig zu dem Zwischenknoten übermittelt wird. Bei dieser Ausgestaltung des erfindungsgemäßen Verfahrens ist insbesondere vorteilhaft, dass aufgrund der selbsttätigen Übermittlung bei dem Zwischenknoten die Datenmenge mit den aktuellen Tätigkeitsarten-Daten vorrätig gehalten wird, so dass ein besonders schneller Zugriff auf die Tätigkeitsart-Daten erfolgen kann. Weiterhin ist vorteilhaft, dass insbesondere bei häufigem Zugriff auf die Tätigkeitsart-Daten eine starke Belastung des Kommunikationsnetzes durch häufige Abfragen vermieden wird.

Bei dem erfindungsgemäßen Verfahren können bei freigegebenem Zugriff durch den Zwischenknoten den Tätigkeitsart-Daten zugeordnete Speicherdaten des Datenspeichers zu dem Kommunikationsendgerät übermittelt werden. Bei dieser Variante des erfindungsgemäßen Verfahrens können vorteilhafterweise in Abhängigkeit von den aktuellen Tätigkeitsart-Daten diesen Tätigkeitsart-Daten jeweils zugeordnete Speicherdaten zu dem Kommunikationsendgerät übermittelt werden. In Abhängigkeit von der Tätigkeitsart des Kommunikationsteilnehmers erhält dieser also verschiedene Speicherdaten an sein Kommunikationsendgerät übermittelt.

Bei dem erfindungsgemäßen Verfahren können zum Abrechnen des Zugriffs von dem Zwischenknoten den Tätigkeitsart-Daten zugeordnete Abrechnungsdaten an ein Abrechnungssystem übermittelt werden. Bei dieser Ausführungsform des erfindungsgemäßen Verfahrens kann vorteilhafterweise eine von der Tätigkeitsart des Kommunikationsteilnehmers abhängige Abrechnung des Zugriffs vorgenommen werden, so dass bei verschiedenen Tätigkeitsarten sich nach Abrechnungshöhe und/oder Abrechnungsart unterscheidende monetäre Abrechnungen des Zugriffs durchgeführt werden können.

Das erfindungsgemäße Verfahren kann vorteilhafterweise auch so ablaufen, dass von dem Zwischenknoten den Tätigkeitsart-Daten zugeordnete Werbeberechtigungsdaten aus dem Berechtigungsspeicher ausgelesen werden und dass entsprechend dieser Werbeberechtigungsdaten zu den abgefragten Speicherdaten Werbedaten hinzugefügt werden. Dabei ist von Vorteil, dass beim Vorliegen von ausgewählten Tätigkeitsarten gemeinsam mit den Speicherdaten auch Werbedaten zu dem Kommunikationsendgerät übertragen werden können. Bei Tätigkeitsarten, bei denen die Zusendung von Werbeinformationen nicht gewünscht ist (beispielsweise bei der Tätigkeitsart "im Büro") kann das Hinzufügen von Werbedaten durch entsprechende Ausgestaltung der Werbeberechtigungsdaten unterdrückt werden.

Bei dem erfindungsgemäßen Verfahren kann als Zwischenknoten ein WAP-Gateway oder ein Proxy-Server verwendet werden.

Das Verfahren kann so ablaufen, dass der Zwischenknoten über eine PAM/SOAP-Schnittstelle von dem Präsenzrechner die Tätigkeitsart-Daten übermittelt bekommt.

Das Verfahren kann so ablaufen, dass der Zwischenknoten über eine Simple/SIP-Schnittstelle von dem Präsenzrechner die Tätigkeitsart-Daten übermittelt bekommt.

Das Verfahren kann aber auch so ablaufen, dass der Zwischenknoten über eine CSP-Schnittstelle oder über eine SSP-Schnittstelle von dem Präsenzrechner die Tätigkeitsart-Daten übermittelt bekommt (CSP = Client-Server-Protocol der Open Mobile Alliance OMA, SSP = Server-Server-Protocol der Open Mobile Alliance OMA).

Zur weiteren Erläuterung der Erfindung ist in
Figur 1 ein Ausführungsbeispiel von Verfahrensschritten des erfindungsgemäßen Verfahrens und in
Figur 2 ein Ausführungsbeispiel von bei dem erfindungsgemäßen Verfahren in dem Berechtigungsspeicher abgespeicherten Daten dargestellt.

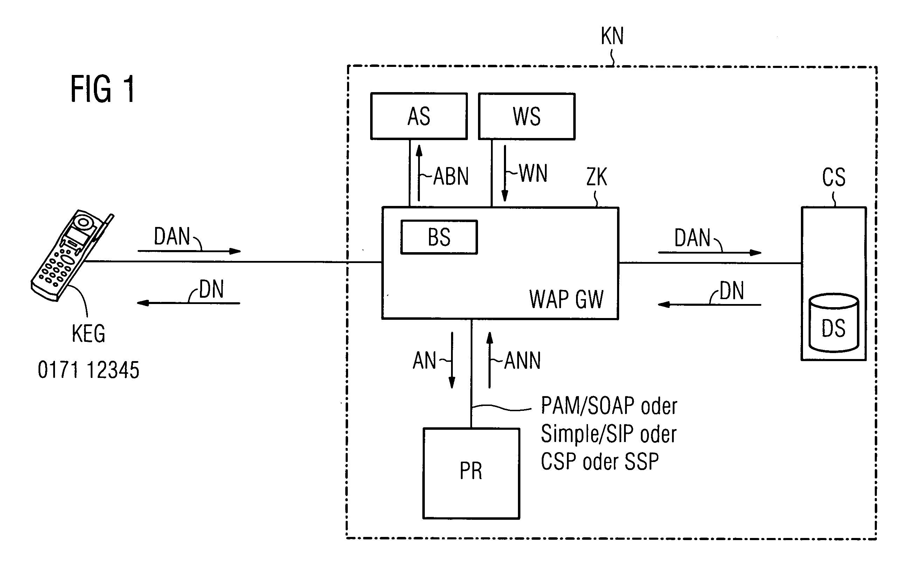

In Figur 1 ist auf der rechten Seite schematisch ein Datenspeicher DS in Form einer Datenbank eines Computer-Servers CS (CS = content server) dargestellt. In diesem Datenspeicher DS sind Daten abgespeichert, bei denen es sich im Ausführungsbeispiel um aktuelle Börsenkursdaten, Wirtschaftsdaten und Nachrichtendaten handelt. Solche in dem Datenspeicher DS abgespeicherten Daten werden im Folgenden als "Speicherdaten" bezeichnet. In einem anderen Ausführungsbeispiel kann es sich bei diesen Daten auch um E-Mails handeln. Der den Datenspeicher DS aufweisenden Computer-Server CS ist über eine Kommunikationsverbindung mit einem Zwischenknoten ZK eines Kommunikationsnetzes KN verbunden. Im Ausführungsbeispiel handelt es sich bei dem Kommunikationsnetz KN um ein Mobilfunknetz und bei dem Zwischenknoten ZK um ein WAP-Nachrichten übertragendes Gateway (WAP = wireless application protocol). Im Ausführungsbeispiel bildet der Computer-Server CS einen Teil des Kommunikationsnetzes KN. In einem anderen Ausführungsbeispiel kann der Computer-Server aber auch außerhalb des Kommunikationsnetzes KN angeordnet sein und beispielsweise einem anderen Kommunikationsnetz (z. B. dem Internet) angehören.

Der Zwischenknoten ZK ist über eine mobilfunkübliche Luftschnittstelle mit einem Kommunikationsendgerät KEG in Form eines Mobilfunktelefons verbunden. Im Ausführungsbeispiel ist dem Kommunikationsendgerät KEG die Mobiltelefonnummer 0171 12345 zugeordnet. Weiterhin ist der Zwischenknoten ZK über eine erste Schnittstelle mit einem Präsenzrechner PR verbunden. Derartige Präsenzrechner als solche und der mit ihnen realisierte Präsenzdienst (presence service) sind beispielsweise aus der Druckschrift 3GPP TS23.141 V6.3.0(2003-06) "3^{rd} Generation Partnership Project; Technical Specification Group Services and System Aspects; Presence Service; Architecture and functional description (Release 6)", aus der Druckschrift "Request for Comments 2778, A Model for Presence and Instant Messaging, February 2000, Network Working Group" oder aus der Druckschrift "Request for Comments 2779, Instant Messaging / Presence Protocol Requirements, February 2000, Network Working Group" bekannt. Weiterhin ist der Zwischenknoten ZK mit einem Abrechnungssystem AS verbunden. Bei diesem Abrechnungssystem AS kann es sich beispielsweise um ein in Mobilfunknetzen übliches "Post-Processing-Abrechnungssystem" zur Abrechnung von Mobiltelefonaten mittels im nachhinein erstellter Rechnungen oder um ein "Online-Abrechnungssystem" (beispielsweise um ein "Prepaid-Abrechnungssystem" zur Abrechnung von Mobiltelefonaten über vorausbezahlte Guthaben) handeln. Weiterhin ist der Zwischenknoten ZK mit einem Werbedatenspeicher WS verbunden, in dem Werbedaten (Werbetexte, Werbebilder und/oder akustische Werbenachrichten) abgespeichert sind.

Zu Beginn des erfindungsgemäßen Verfahrens wird von dem Kommunikationsendgerät KEG eine Datenanforderungsnachricht DAN an den (nachrichtenflussbezogen) zwischen dem Kommunikationsendgerät KEG und dem Datenspeicher DS angeordneten Zwischenknoten ZK gesendet. Diese Datenanforderungsnachricht enthält die Information, dass von Seiten des Kommunikationsendgerätes KEG auf Speicherdaten darstellende Börsenkursdaten des Datenspeichers DS zugegriffen werden soll. Bei diesem Zugriff sollen die Börsenkursdaten von dem Datenspeicher DS über den Zwischenknoten ZK an das Kommunikationsendgerät KEG übertragen werden. Weiterhin enthält die Datenanforderungsnachricht DAN ein Identifikationsmerkmal des Kommunikationsendgerätes KEG bzw. des Benutzers des Kommunikationsgerätes in Form der Mobilfunkrufnummer 0171 12345. Auf den Empfang der Datenanforderungsnachricht DAN hin liest der Zwischenknoten ZK das Identifikationsmerkmal des Kommunikationsendgerätes KEG aus dieser Nachricht aus und sendet dieses Identifikationsmerkmal mittels einer Abfragenachricht AN an den Präsenzrechner PR, mit der die aktuelle Tätigkeitsart des Kommunikationsteilnehmers von dem Präsenzrechner abgefragt wird. In dem Präsenzrechner sind die aktuelle Tätigkeitsart des Kommunikationsteilnehmers betreffende Tätigkeitsart-Daten abgespeichert und werden mittels des Identifikationsmerkmals des Kommunikationsendgeräts KEG ermittelt. Mit einer Antwortnachricht ANN werden die Tätigkeitsart-Daten an den Zwischenknoten ZK übertragen. Zur Ermittlung der aktuellen Tätigkeitsart-Daten des Kommunikationsteilnehmers wird also vorteilhafterweise ein an sich bekanntes Netzelement, der Präsenzrechner PR, verwendet. Dadurch lässt sich das erfindungsgemäße Verfahren besonders einfach realisieren, da durch den Zwischenknoten ZK die Tätigkeitsart-Daten in einfacher und bequemer Weise mittels des Präsenzrechners PR ermittelt werden können.

Im Ausführungsbeispiel ist in dem Präsenzrechner PR als Tätigkeitsart-Daten gespeichert, dass der Nutzer des Kommunikationsendgerätes KEG sich derzeit bei der Arbeit im Büro befindet. Folglich werden mit der Antwortnachricht ANN die Tätigkeitsart-Daten "im Büro" an den Zwischenknoten ZK übermittelt.

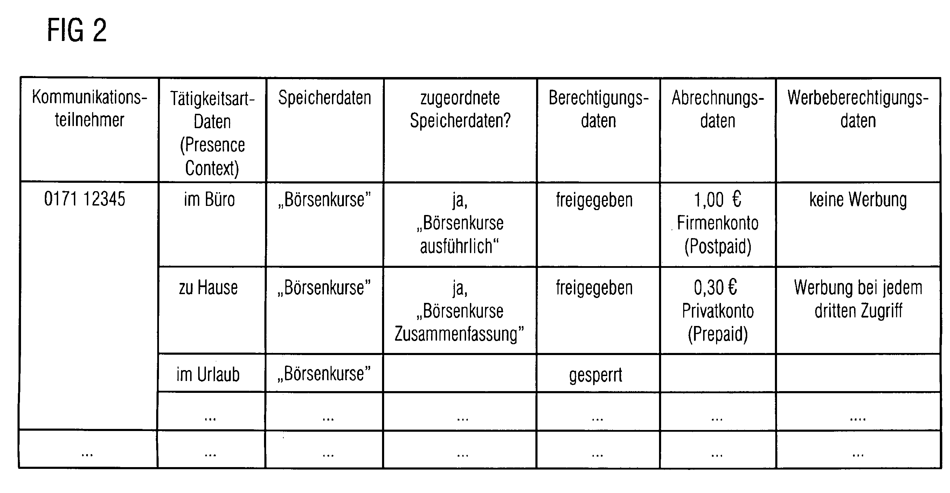

In Figur 2 ist ein Ausschnitt einer Tabelle dargestellt, die in einem Berechtigungsspeicher BS des Zwischenknotens ZK gespeichert ist. In der Tabelle sind im allgemeinen für verschiedene Kommunikationsteilnehmer (die mittels ihrer das Identifikationsmerkmal darstellenden Mobilfunkrufnummer unterschieden werden) jeweils eine Mehrzahl von Daten abgespeichert; in Figur 2 sind beispielhaft lediglich die den Kommunikationsteilnehmer mit der Mobilfunknummer 0171 12345 betreffenden Daten dargestellt. Für den Kommunikationsteilnehmer mit der Mobilfunkrufnummer 0171 12345 sind in der Tabelle des Berechtigungsspeichers BS drei verschiedene Tätigkeitsart-Daten abgespeichert (derartige Tätigkeitsart-Daten werden gelegentlich auch als "presence context" bezeichnet): Es sind die Tätigkeitsarten "im Büro", "zu Hause" oder "im Urlaub" aufgeführt. Wenn auf den Kommunikationsteilnehmer die Tätigkeitsart "im Büro" zutrifft und durch das Kommunikationsendgerät KEG Speicherdaten in Form von "Börsenkursen" angefordert werden, dann sind die dem Tätigkeitsart-Datum "im Büro" zugeordneten Informationen bzw. Daten zu nennenden:
- zugeordnete Speicherdaten: Dem Kommunikationsteilnehmer sollen bei dieser Tätigkeitsart die ausführlichen Börsenkurse als zugeordnete Speicherdaten übermittelt werden.
- Berechtigungsdaten: Der Kommunikationsteilnehmer hat die Berechtigung, die Speicherdaten "Börsenkurse" anzufordern.
- Abrechnungsdaten: Die Anforderung kostet 1,00 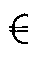 , das "Postpaid"-Firmenkonto des Arbeitgebers des Kommunikationsteilnehmers wird mit dieser Geldsumme (1,00 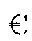 ) belastet (Rechnungserstellung und Bezahlung erfolgen zu einem späteren Zeitpunkt).
- Werbeberechtigungsdaten: Bei diesem Zugriff auf die Speicherdaten sollen keine Werbedaten an das Kommunikationsendgerät übermittelt werden.
Diese Informationen sind in der ersten Zeile des Datensatzes des Kommunikationsteilnehmers 0171 12345 dargestellt.

In der zweiten Zeile dieses Datensatzes sind die der Tätigkeitsart "zu Hause" zugeordneten Daten abgespeichert: Befindet sich der Kommunikationsteilnehmer zu Hause und fordert er Börsenkurse an, so wird dem Kommunikationsteilnehmer der Zugriff auf eine Zusammenfassung der Börsenkurse freigegeben bzw. ermöglicht. Für diesen Zugriff besitzt er folglich die Berechtigungsdaten "freigegeben"; dieser Zugriff wird abgerechnet, indem 0,30 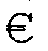 von dem Prepaid-Privatkonto (Guthabenkonto) des Kommunikationsteilnehmers abgebucht werden. Bei jedem dritten Zugriff werden Werbedaten zusätzlich zu den Speicherdaten an das Kommunikationsendgerät KEG des Kommunikationsteilnehmers übertragen.

Wenn sich der Kommunikationsteilnehmer im Urlaub befindet (Tätigkeitsart-Daten: "im Urlaub"), dann besitzt er keine Berechtigung, auf die Börsenkurse zuzugreifen (Zeile 3 des Datensatzes). In dem Berechtigungsspeicher BS können in analoger Art und Weise Datensätze für eine Vielzahl weiterer Kommunikationsteilnehmer abgespeichert sein.

Aus dem in Figur 1 dargestellten Berechtigungsspeicher BS des Zwischenknotens ZK werden nach dem Eintreffen der aktuellen Tätigkeitsart-Daten "im Büro" die den Tätigkeitsart-Daten "im Büro" zugeordneten Berechtigungsdaten ("freigegeben") ausgelesen. Diese Berechtigungsdaten enthalten die Information, dass für den sich in der Tätigkeitsart "im Büro" befindenden Kommunikationsteilnehmer eine Berechtigung zum Zugriff auf die Speicherdaten "Börsenkurse" vorliegt. Dementsprechend wird der Zugriff auf diese Speicherdaten freigegeben, indem die Datenanforderungsnachricht DAN von dem Zwischenknoten ZK an den Datenspeicher DS weitergeleitet wird. Zusätzlich wird mit der Datenanforderungsnachricht DAN die Information übertragen, dass auf die zugeordneten Speicherdaten "Börsenkurse ausführlich" zugegriffen werden soll. Daraufhin liest der Computer-Server CS aus dem Datenspeicher DS die ausführlichen Börsenkurse aus und sendet diese Speiaherdaten mittels einer Datennachricht DN über den Zwischenknoten ZK an das Kommunikationsendgerät KEG zurück. Diese ausführlichen Börsen-Daten stellen also den Tätigkeitsart-Daten zugeordnete Speicherdaten des Datenspeichers dar. Entsprechend den den Tätigkeitsart-Daten "im Büro" zugeordneten Werbeberechtigungsdaten wird keinerlei Werbung zu den Speicherdaten hinzugefügt.

Der Zwischenknoten ZK liest weiterhin die den Tätigkeitsart-Daten "im Büro" zugeordneten Abrechnungsdaten aus der Tabelle des Berechtigungsspeichers BS aus und übermittelt diese Abrechnungsdaten mittels einer Abrechnungsnachricht ABN an das Abrechungssystem AS. Daraufhin belastet das Abrechnungssystem AS das (durch eine mitübermittelte Kontonummer genau bezeichnete) Firmenkonto mit dem Betrag in Höhe von 1,00 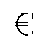 für den Zugriff auf die Speicherdaten. Damit wird der Zugriff abgerechnet.

Wenn bei einem weiteren Verfahrenslauf der Kommunikationsteilnehmer zu Hause tätig ist und sich demzufolge in der Tätigkeitsart "zu Hause" befindet, dann werden im Unterschied zu dem bisher beschriebenen Verfahrensablauf aus dem Berechtigungsspeicher BS die zugeordneten Werbeberechtigungsdaten ausgelesen, welche die Information enthalten, dass bei jedem dritten Zugriff Werbung an das Kommunikationsendgerät KEG zu übertragen ist. Dementsprechend liest der Zwischenknoten ZK bei jedem dritten Zugriff des Kommunikationsendgerätes KEG aus dem Werbedatenspeicher WS Werbedaten aus, diese Werbedaten (z. B. Werbetexte) werden mittels einer Werbenachricht WN an den Zwischenknoten übermittelt und von diesem gemeinsam mit den Speicherdaten in der Datennachricht DN an das Kommunikationsendgerät KEG gesendet.

In einer alternativen Ausführungsform des erfindungsgemäßen Verfahrens brauchen die Tätigkeitsart-Daten nicht von dem Präsenzrechner PR abgefragt werden (fetch-Modus), sondern diese Tätigkeitsart-Daten werden (ohne die Notwendigkeit einer wiederholten Abfrage) von dem Präsenzrechner PR an den Zwischenknoten ZK übertragen (Push-Modus). Bei jeder Änderung der Tätigkeitsart des Kommunikationsteilnehmers (beispielsweise wenn dieser seine Tätigkeit im Büro beendet und sich zur Durchführung häuslicher Tätigkeiten nach Hause begibt) werden die neuen Tätigkeitsart-Daten ("zu Hause") selbsttätig durch den Präsenzrechner zu dem Zwischenknoten übermittelt. Die Tätigkeitsart-Daten werden in einer Datenmenge übermittelt, diese Datenmenge wird bei dem Zwischenknoten vorrätig gehalten und aus dieser Datenmenge werden bei Bedarf die Tätigkeitsart-Daten des jeweiligen Kommunikationsteilnehmers ausgelesen.

Wenn der Zwischenknoten ZK als WAP-Gateway WAP GW ausgestaltet ist, dann werden als Datenanforderungsnachrichten DAN Nachrichten des Typs "WAP-Request" und als Datennachrichten DN Nachrichten des Typs "WAP-Response" übertragen. Alternativ kann der Zwischenknoten ZK jedoch auch als ein Proxy-Server (beispielsweise als ein HTTP-Proxy-Server) ausgestaltet sein; in diesem Falle werden als Datenanforderungsnachricht DAN Nachrichten des Typs "HTTP-Request" und als Datennachrichten DN Nachrichten des Typs "HTTP-Response" übertragen.

Die Tätigkeitsart-Daten können von dem Präsenzrechner PR über eine PAM/SOAP-Schnittstelle an den Zwischenknoten ZK übertragen werden (PAM/SOAP = Presence and Availability Management Forum / Simple Object Access Protocol). Alternativ können die Tätigkeitsart-Daten auch über eine Simple/SIP-Schnittstelle übertragen werden ("Simple" ist eine von der IETF definierte Erweiterung des session initiation protocols SIP für Präsenz-Anwendungen und Instant messaging). Alternativ können die Tätigkeitsdaten auch über eine CSP-Schnittstelle oder über eine SSP-Schnittstelle übermittelt werden (CSP = Client-Server-Protocol der Open Mobile Alliance OMA, SSP = Server-Server-Protocol der Open Mobile Alliance OMA).

Es wurde ein Verfahren zum Kontrollieren des Zugriffs auf Speicherdaten beschrieben, bei dem die Zugriffskontrolle unter Verwendung von dynamischen Statusinformationen (Tätigkeitsart-Daten = presence context) durchgeführt wird. Dadurch kann vorteilhafterweise berücksichtigt werden, dass jeder Kommunikationsteilnehmer mehrere verschiedene Rollen einnehmen kann, die durch Tätigkeitsart-Daten ("im Büro", "zu Hause", "im Urlaub") beschrieben werden. Durch den Tätigkeitsart-Daten zugeordnete Berechtigungsdaten, Abrechnungsdaten, Werbeberechtigungsdaten und Speicherdaten wird vorteilhafterweise ermöglicht, dass für jeden Kommunikationsteilnehmer entsprechend der jeweiligen Tätigkeitsart verschiedene Berechtigungen und Vorlieben bezüglich der von ihm anzufordernden Daten berücksichtigt werden können. Mittels der Berechtigungsdaten und/oder der zugeordneten Speicherdaten kann eine Filterfunktion realisiert werden. Mit dieser Filterfunktion können dem dienstlich tätigen Kommunikationsteilnehmer andere Daten zugänglich gemacht werden als dem privat tätigen Kommunikationsteilnehmer. Ebenso ist von Vorteil, dass eine tätigkeitsartabhängige Abrechnung des Zugriffs (beispielsweise über verschiedene Konten für dienstliche und private Speicherdaten) durchgeführt werden kann.

## Patentansprüche

1. Verfahren zum Kontrollieren des Zugriffs auf in einem Datenspeicher (DS) eines Kommunikationsnetzes (KN) gespeicherte Speicherdaten, wobei bei dem Verfahren
- auf den Empfang einer von einem Kommunikationsendgerät (KEG) eines Kommunikationsteilnehmers stammenden Datenanforderungsnachricht (DAN) hin von einem zwischen dem Kommunikationsendgerät (KEG) und dem Datenspeicher (DS) angeordneten Zwischenknoten (ZK) die aktuelle Tätigkeitsart des Kommunikationsteilnehmers betreffende Tätigkeitsart-Daten mittels eines Präsenzrechners (PR) ermittelt werden,
- aus einem Berechtigungsspeicher (BS) des Zwischenknotens (ZK) den Tätigkeitsart-Daten zugeordnete Berechtigungsdaten ausgelesen werden, welche eine tätigkeitsartabhängige Berechtigung des Kommunikationsteilnehmers zum Zugriff auf die mit der Datenanforderungsnachricht (DAN) angeforderten Speicherdaten betreffen, und
- entsprechend dieser ausgelesenen Berechtigungsdaten der Zugriff auf die Speicherdaten freigegeben oder gesperrt wird.

2. Verfahren nach Anspruch 1,
**dadurch gekennzeichnet, dass**
- die Tätigkeitsart-Daten ermittelt werden, indem diese von dem Präsenzrechner (PR) abgefragt werden.

3. Verfahren nach Anspruch 1 oder 2,
**dadurch gekennzeichnet, dass**
- die Tätigkeitsart-Daten ermittelt werden, indem diese aus einer Datenmenge ausgelesen werden, die bei Auftreten von Änderungen der Tätigkeitsart von Kommunikationsteilnehmern durch den Präsenzrechner (PR) selbsttätig zu dem Zwischenknoten (ZK) übermittelt wird.

4. Verfahren nach einem der vorhergehenden Ansprüche,
**dadurch gekennzeichnet, dass**
- bei freigegebenem Zugriff durch den Zwischenknoten (ZK) den Tätigkeitsart-Daten zugeordnete Speicherdaten des Datenspeichers (DS) zu dem Kommunikationsendgerät (KEG) übermittelt werden.

5. Verfahren nach einem der vorhergehenden Ansprüche,
**dadurch gekennzeichnet, dass**
- zum Abrechnen des Zugriffs von dem Zwischenknoten (ZK) den Tätigkeitsart-Daten zugeordnete Abrechnungsdaten an ein Abrechnungssystem (AS) übermittelt werden.

6. Verfahren nach einem der vorhergehenden Ansprüche,
**dadurch gekennzeichnet, dass**
- von dem Zwischenknoten (ZK) den Tätigkeitsart-Daten zugeordnete Werbeberechtigungsdaten aus dem Berechtigungsspeicher (BS) ausgelesen werden und entsprechend dieser Werbeberechtigungsdaten zu den abgefragten Speicherdaten Werbedaten hinzugefügt werden.

7. Verfahren nach einem der vorhergehenden Ansprüche,
**dadurch gekennzeichnet, dass**
- als Zwischenknoten (ZK) ein WAP-Gateway oder ein Proxy-Server verwendet wird.

8. Verfahren nach einem der vorhergehenden Ansprüche,
**dadurch gekennzeichnet, dass**
- der Zwischenknoten (ZK) über eine PAM/SOAP-Schnittstelle von dem Präsenzrechner (PR) die Tätigkeitsart-Daten übermittelt bekommt.

9. Verfahren nach einem der vorhergehenden Ansprüche,
**dadurch gekennzeichnet, dass**
- der Zwischenknoten (ZK) über eine Simple/SIP-Schnittstelle von dem Präsenzrechner (PR) die Tätigkeitsart-Daten übermittelt bekommt.

10. Verfahren nach einem der vorhergehenden Ansprüche,
**dadurch gekennzeichnet, dass**
- der Zwischenknoten (ZK) über eine CSP-Schnittstelle oder über eine SSP-Schnittstelle von dem Präsenzrechner (PR) die Tätigkeitsart-Daten übermittelt bekommt.
